# EUROPEAN PATENT SPECIFICATION

(11) **EP 3 839 916 B1**
(45) Date of publication and mention of the grant of the patent: **25.10.2023**
(21) Application number: 19218340.8
(22) Date of filing: 19.12.2019
(51) Int. Cl.: G08G 1/01, G08G 1/0962, B60W 50/14, B60W 60/00, G08G 1/04, B60W 30/095

(54) **A SYSTEM AND METHOD FOR PROVIDING DECISION SUGGESTIONS TO AN OPERATOR OF A VEHICLE AND A COMPUTER PROGRAM PRODUCT**
SYSTEM UND VERFAHREN ZUR BEREITSTELLUNG VON ENTSCHEIDUNGSVORSCHLÄGEN FÜR EINEN BEDIENER EINES FAHRZEUGS UND COMPUTERPROGRAMMPRODUKT
SYSTÈME ET PROCÉDÉ POUR FOURNIR DES SUGGESTIONS DE DÉCISION À UN OPÉRATEUR D'UN VÉHICULE ET PRODUIT-PROGRAMME D'ORDINATEUR

(43) Date of publication of application: 23.06.2021
(73) Proprietor: Ningbo Geely Automobile Research & Development Co., Ltd., Ningbo, Zhejiang 315336 (CN); Zhejiang Geely Holding Group Co., Ltd., Hangzhou, Zhejiang 310051 (CN)
(72) Inventor: Lindberg Nilsson, Erik, 417 47 Göteborg (SE); Shariatzadeh, Pardis, 421 70 Västra Frölunda (SE)
(74) Representative: Zacco Sweden AB

(56) References cited:
- EP-A1- 3 159 235
- EP-A1- 3 264 391
- US-A1- 2019 051 163

## Description

### Technical field

The present disclosure relates to a system for providing decision suggestions to an operator of a vehicle, a method for providing decision suggestions to an operator of a vehicle and a computer program product.

### Background art

Traffic regulations exist over the entire world and are essentially the same in all countries. Some basic rules are mirrored when comparing right-hand traffic and left-hand traffic. In right-hand traffic a basic rule is e.g. that a vehicle coming from the right in an unmarked intersection has priority and a vehicle coming from the left has to yield. The opposite is the case in most countries having left-hand traffic, although large local variations exist.

However, if the intersecting road is not a road but a drive way or exit from a house the "priority to the right" rule does not apply. In such situations the normal road has priority. In some cases it is not obvious if an intersecting road is an exit or a normal road.

On top of such basic rules traffic signs often determine which vehicle has priority in an intersection. A number of signs e.g. priority road signs or yield signs determine which vehicle has priority.

When driving through an intersection, it may thus in some cases be hard to know which vehicle has priority and which vehicle should give way for who. Even in cases where the "priority to the right" rule apply it is not always followed in practice. People that are familiar to the area instead drive in way that feels "right" due to the specific situation. It could perhaps be that one road is much bigger and thereby is perceived as a priority road.

There are also several road signs where yield situations occur where the "priority to the right" rule apply. For example a sign where two lanes becomes one yield situations occur.

A prior art solution is disclosed in the patent document EP 3264391 A1 disclosing method and a system for assisting a driver in driving a vehicle, as well as a vehicle with such system being mounted thereon. Information on an environment of a vehicle is obtained by sensing the environment.

It is thus not obvious in all situations how other vehicles will behave. In most cases all drivers follow the local traffic regulations, but as discussed above, in many situations the traffic regulations are not followed. Consequently, a traffic safety problem exist that is not yet addressed in the prior art. Some existing driver assistance systems can assist the driver of a vehicle with traffic rules, but as discussed above, that will not always be sufficient when other drivers ignore the traffic rules.

### Summary

It is an object of the present disclosure to mitigate, alleviate or eliminate one or more of the above-identified deficiencies and disadvantages in the prior art and solve at least the above mentioned problem. According to a first aspect there is provided a system for providing decision suggestions to an operator of a vehicle, the system comprising: a traffic sensor for detecting a traffic situation, a database containing situation statistics for the traffic situation, a processing circuitry comprising a processor, and wherein the processing circuitry is operatively connected to the traffic sensor and database and configured to cause the system to:
retrieve situation statistics from the database based on the detected traffic situation, provide a suggested operator decision based on the situation statistics.

The operator of the vehicle will thereby be assisted with a suggestion when approaching a situation where an operator decision is required. The suggestion is based on statistics of normal driving behavior for the traffic situation and is not based on traffic rules. The operator of the vehicle thereby receives the combined local knowledge of all previous drivers and how they have reacted in the same situation. The traffic situation could e.g. a four way intersection where a small road crosses a much bigger road without any traffic signs or priority signs.

The statistical approach on behaviors can support the operator of the vehicle to how traffic regularly behaves locally, e.g. when in a foreign country. A normal traffic behavior in one country can lead to accidents in another country with the same basic traffic rules, just due to different driving cultures.

Further, autonomous cars can be prepared when approaching an intersection, by slowing down if it is an intersection where other cars are supposed to yield, but usually don't. The autonomous car can thereby take into account the human factor that may be very difficult for a machine to learn on its own.

According to some embodiments, the system comprises a position sensor, wherein the processing circuitry is further configured to cause the system to: obtain, by the position sensor, a location data associated with the geographical location of the vehicle, and determine that the location data is associated with the traffic situation based on location data associated with location of the traffic situation. The location data could be any positioning means where a geographical location can be derived. A satellite navigation position is naturally a preferred input, but radio based less accurate location means could also be sufficient to identify a specific location in the database.

The vehicle operator can thereby receive traffic situation statistics based on the statistics for the specific local traffic situation encountered. A vehicle operator driving on a road for the first time is thereby assisted with local knowledge not otherwise available without extensive personal local experience.

According to the claimed embodiments, the database further comprises traffic regulations and the processing circuitry is further configured to cause the system to: retrieve a traffic regulation from the database based on the traffic situation, provide a suggested operator decision based on the situation statistics and provide a warning to the operator if any matching situation traffic regulation contradicts the suggested operator decision. Thereby the driver will get a suggestion according to the traffic situation statistics while at the same time a notification or warning if the suggestion is not in line with the local traffic rule. The vehicle operator is then informed about how other drivers usually behave in the traffic situation and warned if the usual behavior contradicts the applicable traffic rule so that the driver can be observant in such situations.

According to some embodiments, the traffic situation is a situation comprised in the group consisting of: a new intersection, a known intersection, a road sign, and an obstacle.

In case of a new intersection, the statistics may be based on equivalent intersections in the database in turn based on estimated road sizes and other characteristics regarding the intersection. A known intersection can be looked up in the database individually and statistics received for that intersection only. In case the statistics is scarce the method can fall back to also include equivalent other intersections. Road signs, obstacles or other identifiable objects may be stored in the database when they are identified as traffic situations. That may e.g. be when irregular traffic behavior is noted for that particular road sign, obstacle or other identifiable object. An equivalent other intersection could be another intersection along the same road, e.g. the next or previous intersection that may be almost identical but could be new for the database or have less associated statistics.

According to some embodiments, the traffic sensor is further adapted to detect other vehicles and wherein the processing circuitry is further configured to cause the system to: detect other vehicles, and retrieve situation statistics from the database based on the determined traffic situation and detected other vehicles.

The suggested operator decision can then be based further based on a statistical prediction of how other vehicles will behave, which as discussed above not always follow traffic regulations.

According to some embodiments, the traffic sensor is further adapted to detect other vehicles and wherein the processing circuitry is further configured to cause the system to: detect position and velocity of other vehicles relative the detected traffic situation, and retrieve situation statistics from the database based on the determined traffic situation and detected other vehicles.

The suggested operator decision may then be even further improved based on a statistical prediction of how other vehicles will behave, which as discussed above not always follow traffic regulations.

According to some embodiments, the system comprises Vehicle To Vehicle communication means, wherein the processing circuitry is further configured to cause the system to: detect position and velocity of other vehicles relative the traffic situation based on information from the V2V communication means, and retrieve situation statistics from the database based on the determined traffic situation and detected other vehicles.

The situation can then be even more precisely determined as collision risks may be disregarded when velocity data clearly indicate that. The suggested operator decision may thus be more precise when it is based on further data.

According to some embodiments, the system comprises wireless communication means, and wherein the database is a network database. The database is thereby always updated and the suggested operator decision may be based on the latest data.

According to some embodiments, the wherein the processing circuitry is further configured to cause the system to: detect operator action for a traffic situation, and upload the operator action for the traffic situation to the database thereby extending the data of the database and increase the statistical population for better future suggested operator decisions.

According to some embodiments, the sensor is at least one of a sensor comprised in the group consisting of: a camera, a LIDAR, a LASER, a radar, and an ultrasound transceiver.

According to a second aspect there is provided a method for providing decision suggestions to an operator of a vehicle, comprising the steps of: detecting a traffic situation using a traffic sensor, providing a database containing situation statistics for the traffic situation, retrieving situation statistics from the database based on the detected traffic situation, providing a suggested operator decision based on the situation statistics.

According to some embodiments, the method comprises the steps of: obtaining, by a position sensor, a location data associated with the geographical location of the vehicle, determining that the location data is associated with the traffic situation.

According to the claimed embodiments, the method comprises the steps of: retrieving a traffic regulation from the database based on the traffic situation, providing a suggested operator decision based on the situation statistics and provide a warning to the operator if any matching situation traffic regulation contradicts the suggested operator decision.

According to some embodiments, the traffic situation is a situation comprised in the group consisting of: a new intersection, a known intersection, a road sign, and an obstacle.

According to some embodiments, the method comprises the steps of: detecting other vehicles, and retrieving situation statistics from the database based on the determined traffic situation and detected other vehicles.

According to some embodiments, the method comprises the steps of: detecting position and velocity of other vehicles relative the traffic situation, and retrieving situation statistics from the database based on the determined traffic situation and detected other vehicles.

According to some embodiments, the method comprises the steps of: detecting position and velocity of other vehicles relative the traffic situation based on information from the V2V communication means, and retrieving situation statistics from the database based on the determined traffic situation and detected other vehicles.

According to some embodiments, the method comprises the steps of: detecting operator action for a traffic situation, upload the operator action for the traffic situation to the database.

According to a third aspect there is provided a computer program product comprising a non-transitory computer readable medium, having thereon a computer program comprising program instructions, the computer program being loadable into a processing circuitry and configured to cause execution of the method according to any of the second aspect.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claims, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a top view of the system of the system 1 for providing decision suggestions to an operator of a vehicle 2.
Figure 2 shows a top view of a traffic situation with four-way intersection.
Figure 3 shows a top view of a traffic situation with three-way intersection.
Figure 4 shows a top view of a traffic situation with three-way intersection.
Figure 5 shows a top view of a traffic situation with three-way intersection and a tree as an obstacle in the road.
Figure 6 shows a top view of three traffic situations with three four-way intersections of a bigger road intersected by three smaller roads.
Figure 7 is a flow chart representing the method according to the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

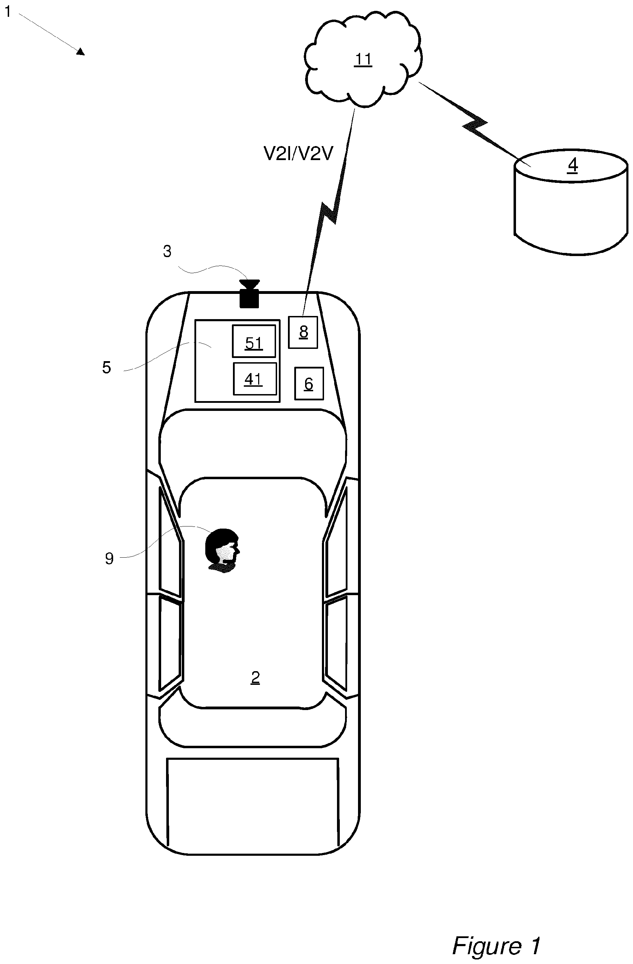

Figure 1 shows the system 1 of the first aspect of this disclosure for providing decision suggestions to an operator of a vehicle 2. The system 1 comprises a traffic sensor 3 for detecting a traffic situation 31,32,33,34, a database 4, 41 containing situation statistics for the traffic situation 31,32,33,34, and a processing circuitry 5 comprising a processor 51. The processing circuitry 5 is operatively connected to the traffic sensor 3 and database 4, 41 and configured to cause the system 1 to determine that the detected traffic situation 31,32,33,34 requires an operator decision, retrieve situation statistics from the database 4 based on the determined traffic situation 31,32,33,34, provide a suggested operator decision based on the situation statistics. The traffic situation may be a new intersection 31, a known intersection 32, a road sign 33, or an obstacle 34.

The operator of the vehicle is assisted with a suggested operator decision when approaching a traffic situation where an operator decision is required. The suggestion is based on statistics of driving behavior for the traffic situation and is not based on traffic rules. The operator of the vehicle thereby receives a statistical fact about the traffic situation. The traffic situation could e.g. a four-way intersection where a small road crosses a much bigger road without any traffic signs or priority signs.

The system of Figure 1 further comprises a position sensor 6, and the processing circuitry 5 is further configured to cause the system 1 to: obtain, by the position sensor 6, a location data associated with the geographical location of the vehicle 2, and determine that the location data is associated with the traffic situation based on location data associated with location of the traffic situation. The geographical location allows the system to check statistics for the specific local traffic situation, e.g. an intersection.

The database 4, 41 further comprises traffic regulations and the processing circuitry 5 is further configured to cause the system 1 to: retrieve a traffic regulation from the database 4, 41 based on the traffic situation, provide a suggested operator decision based on the situation statistics and provide a warning to the operator if any matching situation traffic regulation contradicts the suggested operator decision. A suggestion according to the traffic situation statistics is provided while at the same time a notification or warning is issued if a traffic rule contradicts the statistical pattern.

The traffic sensor 3 is further adapted to detect other vehicles and the processing circuitry 5 is further configured to cause the system 1 to: detect other vehicles 7, and retrieve situation statistics from the database 4, 41 based on the determined traffic situation 31,32,33,34 and detected other vehicles. The traffic sensor 3 is further adapted to detect other vehicles 7 and wherein the processing circuitry 5 is further configured to cause the system 1 to: detect position and velocity of other vehicles 7 relative the detected traffic situation, and retrieve situation statistics from the database 4 based on the determined traffic situation 31,32,33,34 and detected other vehicles 7. The system comprises Vehicle To Vehicle V2V communication means 8, wherein the processing circuitry 5 is further configured to cause the system 1 to: detect position and velocity of other vehicles relative the traffic situation based on information from the V2V communication means 8, and retrieve situation statistics from the database 4 based on the determined traffic situation 31,32,33,34 and detected other vehicles.

The system further comprises wireless communication means 53, and the database 4 is a network database. As shown in Figure 1, the database is accessed either via a Vehicle to Internet protocol or via a Vehicle to Vehicle protocol. A local copy of the database or parts of the database may be kept in the memory 41 in the vehicle so that the system works also when the wireless connection is off line.

The processing circuitry 5 is further configured to cause the system 1 to: detect operator action for a traffic situation, and upload the operator action for the traffic situation to the local database 41 and the network based database 4 to enhance the statistical population of the database.

The sensor 3 shown in Figure 1 is at least one of a sensor comprised in the group consisting of: a camera, a LIDAR, a LASER, a radar, and an ultrasound transceiver.

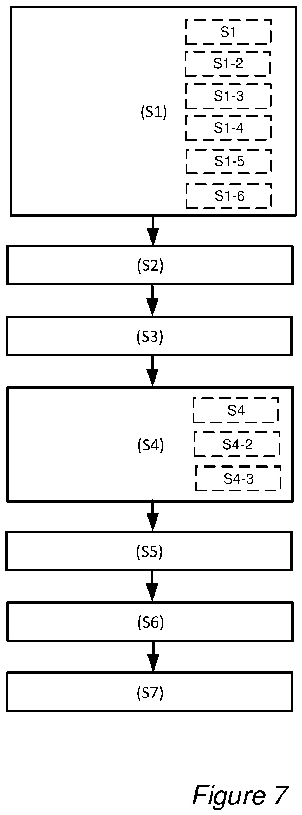

With reference to Figure 7, the second aspect of this disclosure shows a method for providing decision suggestions to an operator of a vehicle 2, comprising the steps of: detecting S1 a traffic situation 31,32,33,34 using a traffic sensor 3, providing S2 a database 4 containing situation statistics for the traffic situation 31,32,33,34, determining S3 that the detected traffic situation 31,32,33,34 requires an operator decision, retrieving situation statistics S4 from the database 4 based on the determined traffic situation 31,32,33,34, providing a suggested operator decision S5 based on the situation statistics.

With reference to Figure 7, the method further comprises the steps of: obtaining S1-2, by a position sensor 6, a location data associated with the geographical location of the vehicle 2, determining S1-3 that the location data is associated with the traffic situation.

The method further comprises the steps of: retrieving S6 a traffic regulation from the database 4 based on the traffic situation, providing a suggested operator decision S5 based on the situation statistics and providing a warning S7 to the operator if any matching situation traffic regulation contradicts the suggested operator decision.

The method further comprises the steps of: detecting S1-4 other vehicles, and retrieving situation statistics S4-2 from the database 4 based on the determined traffic situation 31,32,33,34 and detected other vehicles.

The method further comprises the steps of: detecting S1-5 position and velocity of other vehicles relative the traffic situation, and retrieving situation statistics S4-3 from the database 4 based on the determined traffic situation 31,32,33,34 and detected other vehicles. The method further comprises the steps of: detecting S1-6 position and velocity of other vehicles relative the traffic situation based on information from the V2V communication means 8, and retrieving situation statistics S4-3 from the database 4 based on the determined traffic situation 31,32,33,34 and detected other vehicles.

The method further comprises the steps of: detecting operator action S8 for a traffic situation, upload S9 the operator action for the traffic situation to the database 4.

The traffic situation may e.g. be a new intersection 31, a known intersection 32, a road sign 33, or an obstacle 34.

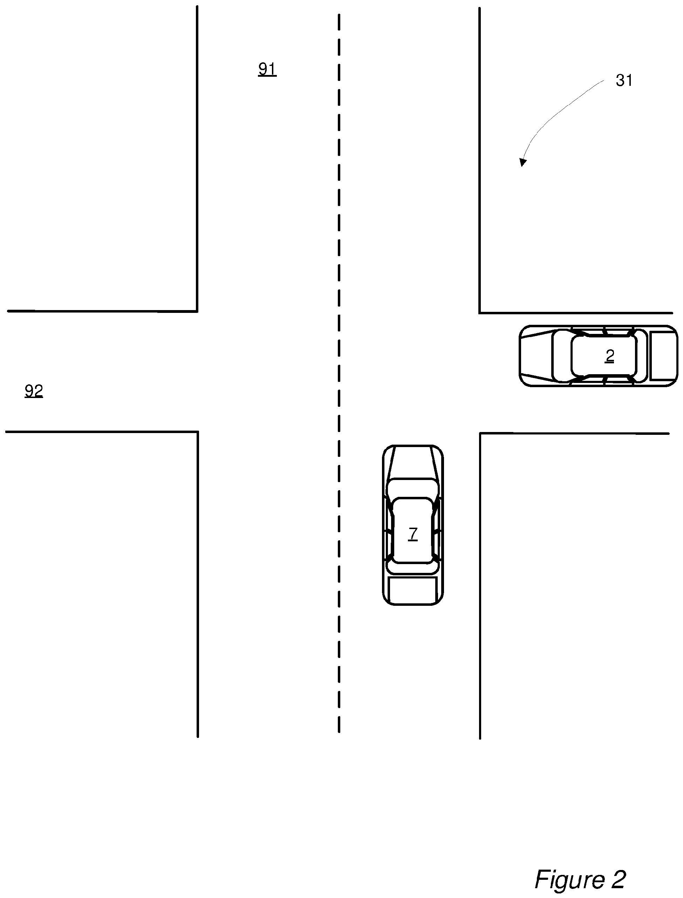

Figure 2 shows a new four-way intersection 31 between a large road 91 and a smaller road 92. The roads are running through a residential area and most cars driving there belong to the people living in the area. The vehicle 7 is such a vehicle, while the vehicle 2 is visiting vehicle driving in the area for the first time. According to local traffic rules, the vehicle 2 has priority as it is approaching from the right and the "priority to the right" rule applies according to local legislation. However, almost all vehicles driving on the larger road 91 ignore the "priority to the right" rule as they feel that the larger road 91 is the main road through the neighbourhood. The vehicle 2 is equipped with the system 1 for providing decision suggestions to an operator 9 of a vehicle. The vehicle system 1 detects the traffic situation using the sensor 3 to a larger road intersecting a small road without traffic signs. The system then checks if location data is available from the position sensor 6. Then the system checks the database 4, 41 and suggest the vehicle operator to yield based on statistical behavior of drivers in that type of traffic situations, or for that unique intersection if a geographical location is available, even though the vehicle 2 has priority according to traffic rules.

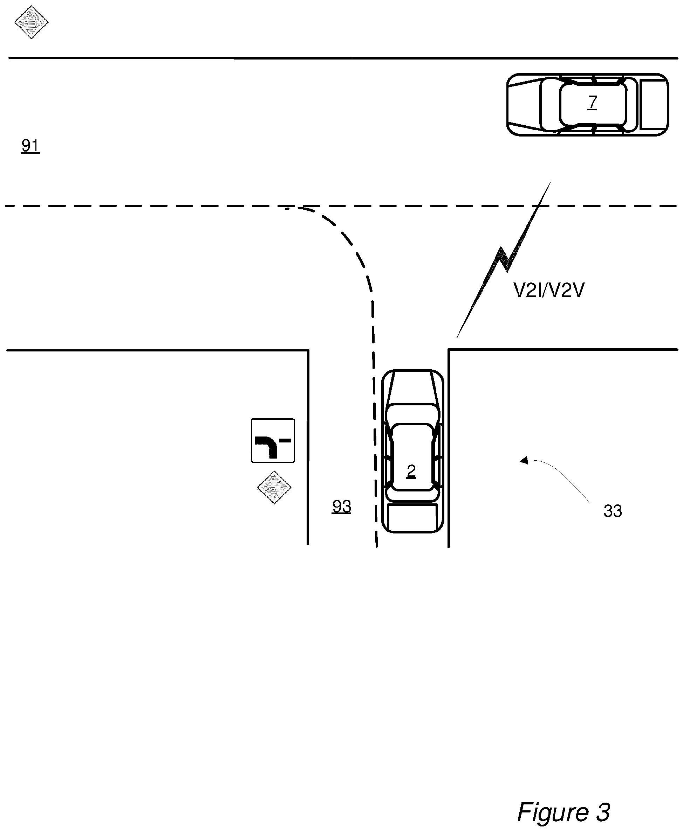

Figure 3 shows an example where a vehicle 2 approaches a three-way intersection. Road signs suggest that the vehicle 2 has priority driving on a main road turning left. The vehicle 2 is equipped with the system 1 for providing decision suggestions to an operator 9 of a vehicle 2. The vehicle system 1 detects the traffic situation using the sensor 3 to a small road 93 ending with an intersecting larger road 91 where traffic signs suggest priority for the vehicle 2 turning right. The system further also detect the other vehicle 7 coming from the right, either by use of the traffic sensor 3 and/or a V2V communication with the other vehicle 7. The system checks the database 4, 41 for the detected traffic situation 33 and receives a decision suggestion to yield, since it is usual that vehicles use the road 91 as a main road also on the right side in Figure 3.

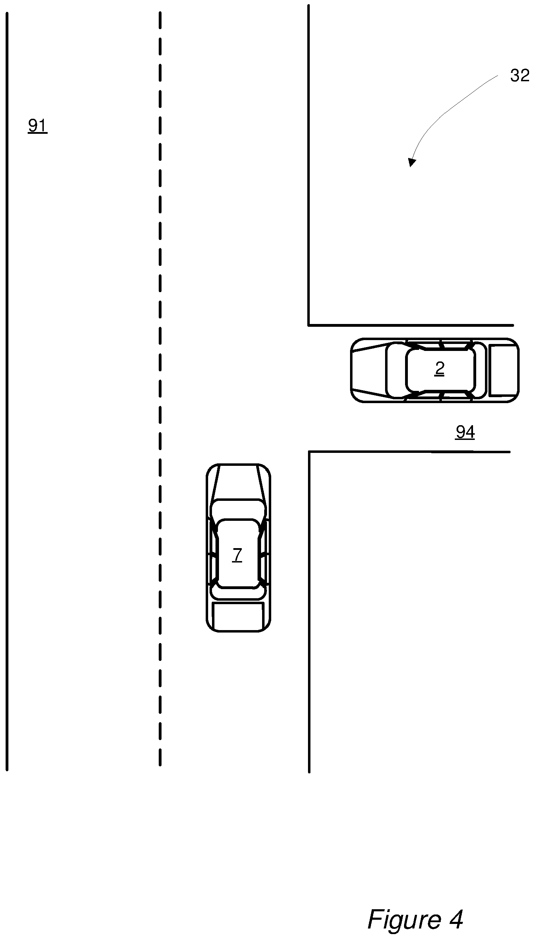

Figure 4 shows a known three-way intersection 31 between a large road 91 and a smaller road 94. The vehicle 7 is a local vehicle, while the vehicle 2 is new to the area. According to local traffic rules, the vehicle 2 has priority as it is approaching from the right and the "priority to the right" rule applies according to local legislation. However, statistically almost all vehicles driving on the larger road 91 ignore the "priority to the right" rule as they feel that the larger road 91 is the main road through the neighbourhood. The vehicle 2 is equipped with the system 1 for providing decision suggestions to an operator of a vehicle. The vehicle system 1 detects the traffic situation using the traffic sensor 3 to a larger road 91 intersecting a small road 94 without traffic signs. The system then checks the database 4, 41 and suggest the vehicle operator to yield based on statistical behavior of drivers in that type of traffic situations even though the vehicle 2 has priority before the other vehicle 7 according to traffic rules.

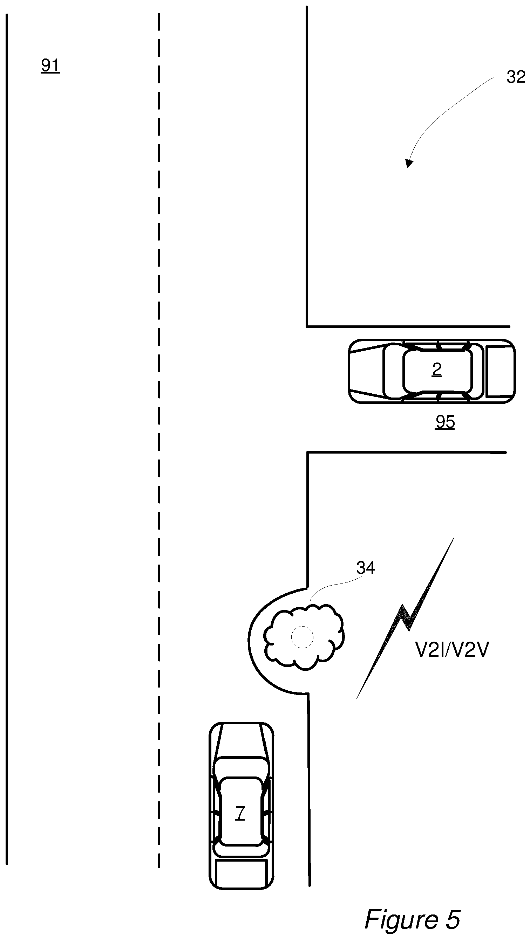

Figure 5 shows a vehicle 7 driving on a larger road 91 having a three-way intersection with a smaller road 95 ending at the larger road 91. The general driving behavior on the road is that the larger road 91 is a main road with priority as intersecting roads are much smaller. However, in Figure 5 the vehicle two has an obstacle 34 in the form of a tree that protrudes out into the side of the larger road 91. The vehicle 2 drives on the smaller road 95 coming up towards the intersection. The vehicle 2 is equipped with the system 1 for providing decision suggestions to an operator of a vehicle. The vehicle system 1 detects the traffic situation using the sensor 3 to a three-way intersection. It further also detects an obstacle in the intersection. The system further also detect the other vehicle 7 coming from the right, by use of V2V communication with the other vehicle 7 as the obstacle 34 blocks the traffic sensor 3 from detecting the other vehicle 7. The system then checks if location data is available from the position sensor 6. Then the system checks the database 4, 41 and suggest the vehicle operator to yield based on statistical behavior of drivers in traffic situation or for that unique intersection if a geographical location is available, even though the vehicle 2 has priority according to traffic rules.

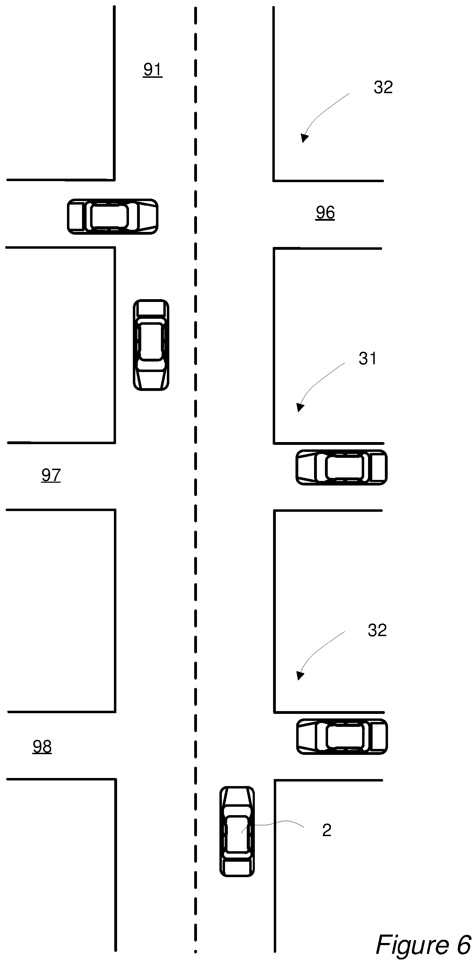

Figure 6 shows a view of three traffic situations with three four-way intersections of a bigger road 91 intersected by three smaller roads 96,97,98. The bigger road may by locals considered a main road, as it is much bigger, but the local traffic rule stipulate the priority-to-the-right rule. In this case the first and third intersections are known intersections 32, while the middle intersection is a new intersection, not known in the database. A vehicle driving along the bigger road 91 equipped with the system 1 for providing decision suggestions to an operator of a vehicle will then retrieve individual statistics for the known intersections 32. For the new intersection 31, the system will identify that the detected traffic situation is similar or identical to the known intersections 32 of Figure 6, and other intersections similar within a predetermined are (e.g. within the same country or region), and provide a suggestion based on identical or similar intersections.

If the vehicle 7 of Figure 5 is not V2V capable, the system will come to the same conclusion and suggest to yield based on statistics that drivers normally do not yield when driving on the larger road 91 and based on the detected obstacle 34 blocking vision for the driver and the traffic sensor 3.

If a geographical location is not determined, the system use statistics of all intersections within a predetermined geographical are (e.g. within a country) with the same characteristics as the one encountered. In that way the system would suggest the same suggestion also regardless of a determined geographical location for the traffic situation.

The third aspect of this disclosure shows a computer program product the second aspect comprising a non-transitory computer readable medium, having thereon a computer program comprising program instructions, the computer program being loadable into a processing circuitry 5 and configured to cause execution of the method according to any of the steps of the second aspect.

The person skilled in the art realizes that the present disclosure is not limited to the preferred embodiments described above. The person skilled in the art further realizes that modifications and variations are possible within the scope of the appended claims. For example, it is understood that a large number of different traffic situation types can be present in the database 4, 41. The traffic situation types 31,32,33,34 are only examples. Additionally, variations to the disclosed embodiments can be understood and effected by the skilled person in practicing the claimed disclosure, from a study of the drawings, the disclosure, and the appended claims.

## Claims

1. A system (1) for providing decision suggestions to an operator of a vehicle (2), the system (1) comprising:
a traffic sensor (3) for detecting a traffic situation (31, 32, 33, 34),
a database (4) containing situation statistics for the traffic situation (31, 32, 33, 34),
a processing circuitry (5) comprising a processor (51), and wherein the processing circuitry (5) is operatively connected to the traffic sensor (3) and database (4) and configured to cause the system (1) to:
retrieve situation statistics from the database (4) based on the detected traffic situation (31, 32, 33, 34),
provide a suggested operator decision based on the situation statistics,
wherein the database (4) further comprises traffic regulations and the processing circuitry (5) is further configured to cause the system (1) to:
retrieve a traffic regulation from the database (4) based on the traffic situation,
provide the suggested operator decision based on the situation statistics and provide a warning to the operator if any matching situation traffic regulation contradicts the suggested operator decision.

2. The system (1) according to claim 1, further comprising a position sensor (6) operatively connected to the processing circuitry (5), wherein the processing circuitry (5) is further configured to cause the system (1) to:
obtain, by the position sensor (6), location data associated with the geographical location of the vehicle (2), and
determine that the location data is associated with the traffic situation based on location data associated with a geographical location of the traffic situation.

3. The system (1) according to any one of the preceding claims, wherein the traffic situation is a situation comprised in the group consisting of: a new intersection (31), a known intersection (32), a road sign (33), and an obstacle (34).

4. The system (1) according to any one of the preceding claims, wherein the traffic sensor (3) is further adapted to detect other vehicles and wherein the processing circuitry (5) is further configured to cause the system (1) to:
detect other vehicles (7), and
retrieve situation statistics from the database (4) based on the determined traffic situation (31, 32, 33, 34) and detected other vehicles.

5. The system (1) according to any one of the preceding claims, wherein the traffic sensor (3) is further adapted to detect other vehicles (7) and wherein the processing circuitry (5) is further configured to cause the system (1) to:
detect position and velocity of other vehicles (7) relative to the detected traffic situation, and
retrieve situation statistics from the database (4) based on the determined traffic situation (31, 32, 33, 34) and detected other vehicles (7).

6. The system (1) according to any one of the preceding claims, further comprising Vehicle To Vehicle (V2V) communication means (8), wherein the processing circuitry (5) is further configured to cause the system (1) to:
detect position and velocity of other vehicles relative to the traffic situation based on information from the V2V communication means (8), and
retrieve situation statistics from the database (4) based on the determined traffic situation (31, 32, 33, 34) and detected other vehicles.

7. The system (1) according to any one of the preceding claims, further comprising wireless communication means (53), and wherein the database (4) is a network database.

8. The system (1) according to claim 7, wherein the processing circuitry (5) is further configured to cause the system (1) to:
detect operator action for a traffic situation, and
upload the operator action for the traffic situation to the database (4).

9. The system (1) according to any one of the preceding claims, wherein the sensor (3) is at least one of a sensor comprised in the group consisting of: a camera, a LIDAR, a LASER, a radar, and an ultrasound transceiver.

10. A method for providing decision suggestions to an operator of a vehicle (2), comprising the steps of:
detecting (S1) a traffic situation (31, 32, 33, 34) using a traffic sensor (3),
providing (S2) a database (4) containing situation statistics for the traffic situation (31, 32, 33, 34),
retrieving situation statistics (S4) from the database (4) based on the detected traffic situation (31, 32, 33, 34),
providing a suggested operator decision (S5) based on the situation statistics,
retrieving (S6) a traffic regulation from the database (4) based on the traffic situation,
providing the suggested operator decision (S5) based on the situation statistics and providing a warning (S7) to the operator if any matching situation traffic regulation contradicts the suggested operator decision.

11. The method according to claim 10, further comprising the steps of:
obtaining (S1-2), by a position sensor (6), a location data associated with the geographical location of the vehicle (2),
determining (S1-3) that the location data is associated with the traffic situation based on location data associated with a geographical location of the traffic situation.

12. The method according to any one of claims 10-11, further comprising the steps of:
detecting (S1-4) other vehicles, and
retrieving situation statistics (S4-2) from the database (4) based on the determined traffic situation (31, 32, 33, 34) and detected other vehicles.

13. A computer program product (50) comprising a non-transitory computer readable medium, having thereon a computer program comprising program instructions, the computer program being loadable into a processing circuitry (5) and configured to cause execution of the method according to any of claims 10-12 when executed by the processing circuitry.

## Patentansprüche

1. System (1) zum Bereitstellen von Entscheidungsvorschlägen für einen Bediener eines Fahrzeugs (2), wobei das System (1) Folgendes umfasst:
einen Verkehrssensor (3) zum Erkennen einer Verkehrssituation (31, 32, 33, 34),
eine Datenbank (4), die Situationsstatistiken zu der Verkehrssituation (31, 32, 33, 34) beinhaltet,
eine Verarbeitungsschaltung (5), die einen Prozessor (51) umfasst, und wobei die Verarbeitungsschaltung (5) betriebswirksam mit dem Verkehrssensor (3) und der Datenbank (4) verbunden ist und dazu konfiguriert ist, das System (1) dazu zu veranlassen:
Situationsstatistiken aus der Datenbank (4) abzurufen, basierend auf der erkannten Verkehrssituation (31, 32, 33, 34),
eine vorgeschlagene Bedienerentscheidung bereitzustellen, basierend auf den Situationsstatistiken,
wobei die Datenbank (4) ferner Verkehrsregelungen umfasst und die Verarbeitungsschaltung (5) ferner dazu konfiguriert ist, das System (1) dazu zu veranlassen:
eine Verkehrsregelung aus der Datenbank (4) abzurufen, basierend auf der Verkehrssituation,
die vorgeschlagene Bedienerentscheidung bereitzustellen, basierend auf den Situationsstatistiken, und dem Bediener eine Warnung bereitzustellen, falls eine übereinstimmende Situationsverkehrsregelung der vorgeschlagenen Bedienerentscheidung widerspricht.

2. System (1) nach Anspruch 1, das ferner einen mit der Verarbeitungsschaltung (5) betriebswirksam verbundenen Positionssensor (6) umfasst, wobei die Verarbeitungsschaltung (5) ferner dazu konfiguriert ist, das System (1) dazu zu veranlassen:
mittels des Positionssensors (6) Standortdaten zu erhalten, die mit dem geographischen Standort des Fahrzeugs (2) assoziiert sind, und
zu bestimmen, dass die Standortdaten mit der Verkehrssituation assoziiert sind, basierend auf Standortdaten, die mit einem geographischen Standort der Verkehrssituation assoziiert sind.

3. System (1) nach einem der vorstehenden Ansprüche, wobei die Verkehrssituation eine Situation ist, die von der Gruppe umfasst wird, welche aus einem neuen Knotenpunkt (31), einem bekannten Knotenpunkt (32), einem Verkehrszeichen (33) und einem Hindernis (34) besteht.

4. System (1) nach einem der vorstehenden Ansprüche, wobei der Verkehrssensor (3) ferner dazu angepasst ist, andere Fahrzeuge zu erkennen, und wobei die Verarbeitungsschaltung (5) ferner dazu konfiguriert ist, das System (1) dazu zu veranlassen:
andere Fahrzeuge (7) zu erkennen und
Situationsstatistiken aus der Datenbank (4) abzurufen, basierend auf der bestimmten Verkehrssituation (31, 32, 33, 34) und erkannten anderen Fahrzeugen.

5. System (1) nach einem der vorstehenden Ansprüche, wobei der Verkehrssensor (3) ferner dazu angepasst ist, andere Fahrzeuge (7) zu erkennen, und wobei die Verarbeitungsschaltung (5) ferner dazu konfiguriert ist, das System (1) dazu zu veranlassen:
Position und Geschwindigkeit anderer Fahrzeuge (7) in Bezug auf die erkannte Verkehrssituation zu erkennen und
Situationsstatistiken aus der Datenbank (4) abzurufen, basierend auf der bestimmten Verkehrssituation (31, 32 ,33 34) und erkannten anderen Fahrzeugen (7).

6. System (1) nach einem der vorstehenden Ansprüche, das ferner Fahrzeug-zu-Fahrzeug(V2V)-Kommunikationsmittel (8) umfasst, wobei die Verarbeitungsschaltung (5) ferner dazu konfiguriert ist, das System (1) dazu zu veranlassen:
Position und Geschwindigkeit anderer Fahrzeuge in Bezug auf die Verkehrssituation zu erkennen, basierend auf Informationen der V2V-Kommunikationsmittel (8), und
Situationsstatistiken aus der Datenbank (4) abzurufen, basierend auf der bestimmten Verkehrssituation (31, 32, 33, 34) und erkannten anderen Fahrzeugen.

7. System (1) nach einem der vorstehenden Ansprüche, das ferner drahtlose Kommunikationsmittel (53) umfasst, und wobei die Datenbank (4) eine Netzwerkdatenbank ist.

8. System (1) nach Anspruch 7, wobei die Verarbeitungsschaltung (5) ferner dazu konfiguriert ist, das System (1) dazu zu veranlassen:
Bedienerhandlungen für eine Verkehrssituation zu erkennen und
die Bedienerhandlungen für die Verkehrssituation in die Datenbank (4) hochzuladen.

9. System (1) nach einem der vorstehenden Ansprüche, wobei der Sensor (3) mindestens einer von einem Sensor ist, der von der Gruppe umfasst wird, die aus einer Kamera, einem Lidar, einem Laser, einem Radar und einem Ultraschall-Sendeempfänger besteht.

10. Verfahren zum Bereitstellen von Entscheidungsvorschlägen für einen Bediener eines Fahrzeugs (2), das die folgenden Schritte umfasst:
Erkennen (S1) einer Verkehrssituation (31, 32, 33, 34) mittels eines Verkehrssensors (3),
Bereitstellen (S2) einer Datenbank (4), die Situationsstatistiken für die Verkehrssituation (31, 32, 33, 34) beinhaltet,
Abrufen von Situationsstatistiken (S4) aus der Datenbank (4), basierend auf der erkannten Verkehrssituation (31, 32, 33, 34),
Bereitstellen einer vorgeschlagenen Bedienerentscheidung (S5), basierend auf den Situationsstatistiken,
Abrufen (S6) einer Verkehrsregelung aus der Datenbank (4), basierend auf der Verkehrssituation,
Bereitstellen der vorgeschlagenen Bedienerentscheidung (S5), basierend auf den Situationsstatistiken, und
Bereitstellen einer Warnung (S7) an den Bediener, falls eine übereinstimmende Situationsverkehrsregelung der vorgeschlagenen Bedienerentscheidung widerspricht.

11. Verfahren nach Anspruch 10, das ferner die folgenden Schritte umfasst:
Erhalten (S1-2), mittels eines Positionssensors (6), von Standortdaten, die mit dem geographischen Standort des Fahrzeugs (2) assoziiert sind,
Bestimmen (S1-3), dass die Standortdaten mit der Verkehrssituation assoziiert sind, basierend auf Standortdaten, die mit einem geographischen Standort der Verkehrssituation assoziiert sind.

12. Verfahren nach einem der Ansprüche 10-11, das ferner die folgenden Schritte umfasst:
Erkennen (S1-4) anderer Fahrzeuge und
Abrufen von Situationsstatistiken (S4-2) aus der Datenbank (4), basierend auf der bestimmten Verkehrssituation (31, 32, 33, 34) und erkannten anderen Fahrzeugen.

13. Computerprogrammprodukt (50), das ein nicht flüchtiges, computerlesbares Medium umfasst, das darauf ein Computerprogramm hat, das Programmanweisungen umfasst, wobei das Computerprogramm in eine Verarbeitungsschaltung (5) ladbar ist und dazu konfiguriert ist, Ausführen des Verfahrens nach einem der Ansprüche 10-12 zu veranlassen, wenn es von der Verarbeitungsschaltung ausgeführt wird.

## Revendications

1. Système (1) pour fournir des suggestions de décision à un opérateur d'un véhicule (2), le système (1) comprenant :
un capteur de circulation (3) pour détecter une situation de circulation (31, 32, 33, 34),
une base de données (4) contenant des statistiques de situation pour la situation de circulation (31, 32, 33, 34),
un circuit de traitement (5) comprenant un processeur (51), et dans lequel le circuit de traitement (5) est connecté de manière fonctionnelle au capteur de circulation (3) et à la base de données (4) et configuré pour amener le système (1) à :
récupérer des statistiques de situation à partir de la base de données (4) sur la base de la situation de circulation détectée (31, 32, 33, 34),
fournir une décision suggérée à l'opérateur sur la base des statistiques de situation,
dans lequel la base de données (4) comprend en outre des règles de circulation et le circuit de traitement (5) est en outre configuré pour amener le système (1) à :
récupérer une règle de circulation à partir de la base de données (4) sur la base de la situation de circulation,
fournir la décision suggérée à l'opérateur sur la base des statistiques de situation et fournir un avertissement à l'opérateur si une règle de circulation dans une situation correspondante contredit la décision suggérée à l'opérateur.

2. Système (1) selon la revendication 1, comprenant en outre un capteur de position (6) connecté de manière fonctionnelle au circuit de traitement (5), dans lequel le circuit de traitement (5) est en outre configuré pour amener le système (1) à :
obtenir, au moyen du capteur de position (6), des données de localisation associées à l'emplacement géographique du véhicule (2), et
déterminer que les données de localisation sont associées à la situation de circulation sur la base de données de localisation associées à une localisation géographique de la situation de circulation.

3. Système (1) selon l'une quelconque des revendications précédentes, dans lequel la situation de circulation est une situation comprise dans le groupe constitué : d'une nouvelle intersection (31), d'une intersection connue (32), d'un panneau routier (33), et d'un obstacle (34).

4. Système (1) selon l'une quelconque des revendications précédentes, dans lequel le capteur de circulation (3) est en outre adapté pour détecter d'autres véhicules et dans lequel le circuit de traitement (5) est en outre configuré pour amener le système (1) à :
détecter d'autres véhicules (7) et
récupérer des statistiques de situation à partir de la base de données (4) sur la base de la situation de circulation déterminée (31, 32, 33, 34) et d'autres véhicules détectés.

5. Système (1) selon l'une quelconque des revendications précédentes, dans lequel le capteur de circulation (3) est en outre adapté pour détecter d'autres véhicules (7) et dans lequel le circuit de traitement (5) est en outre configuré pour amener le système (1) à :
détecter la position et la vitesse d'autres véhicules (7) par rapport à la situation de circulation détectée, et
récupérer des statistiques de situation à partir de la base de données (4) sur la base de la situation de circulation déterminée (31, 32, 33, 34) et d'autres véhicules détectés (7).

6. Système (1) selon l'une quelconque des revendications précédentes, comprenant en outre des moyens de communication de véhicule à véhicule (V2V) (8), dans lequel le circuit de traitement (5) est en outre configuré pour amener le système (1) à :
détecter la position et la vitesse d'autres véhicules par rapport à la situation de circulation sur la base des informations provenant des moyens de communication V2V (8), et
récupérer des statistiques de situation à partir de la base de données (4) sur la base de la situation de circulation déterminée (31, 32, 33, 34) et d'autres véhicules détectés.

7. Système (1) selon l'une quelconque des revendications précédentes, comprenant en outre des moyens de communication sans fil (53), et dans lequel la base de données (4) est une base de données réseau.

8. Système (1) selon la revendication 7, dans lequel le circuit de traitement (5) est en outre configuré pour amener le système (1) à :
détecter l'action de l'opérateur pour une situation de circulation, et
télécharger l'action de l'opérateur pour la situation de circulation dans la base de données (4).

9. Système (1) selon l'une quelconque des revendications précédentes, dans lequel le capteur (3) est au moins l'un d'un capteur compris dans le groupe constitué : d'une caméra, d'un LIDAR, d'un LASER, d'un radar et d'un émetteur-récepteur à ultrasons.

10. Procédé pour fournir des suggestions de décision à un opérateur d'un véhicule (2), comprenant les étapes suivantes :
la détection (S1) d'une situation de circulation (31, 32, 33, 34) à l'aide d'un capteur de circulation (3),
la fourniture (S2) d'une base de données (4) contenant des statistiques de situation pour la situation de circulation (31, 32, 33, 34),
la récupération des statistiques de situation (S4) à partir de la base de données (4) sur la base de la situation de circulation détectée (31, 32, 33, 34),
la fourniture d'une décision suggérée à l'opérateur (S5) sur la base des statistiques de situation,
la récupération (S6) d'une règle de circulation à partir de la base de données (4) sur la base de la situation de circulation,
la fourniture de la décision suggérée à l'opérateur (S5) sur la base des statistiques de situation et la fourniture d'un avertissement (S7) à l'opérateur si une règle de circulation de situation correspondante contredit la décision suggérée à l'opérateur.

11. Procédé selon la revendication 10, comprenant en outre les étapes suivantes :
l'obtention (S1-2), au moyen d'un capteur de position (6), de données de localisation associées à la localisation géographique du véhicule (2),
le fait de déterminer (Sl-3) que les données de localisation sont associées à la situation de circulation sur la base de données de localisation associées à une localisation géographique de la situation de circulation.

12. Procédé selon l'une quelconque des revendications 10 à 11, comprenant en outre les étapes suivantes :
la détection (S1-4) d'autres véhicules et
la récupération de statistiques de situation (S4-2) à partir de la base de données (4) sur la base de la situation de circulation déterminée (31, 32, 33, 34) et d'autres véhicules détectés.

13. Produit programme informatique (50) comprenant un support non transitoire lisible par ordinateur, sur lequel se trouve un programme informatique comprenant des instructions de programme, le programme informatique pouvant être chargé dans un circuit de traitement (5) et configuré pour provoquer l'exécution du procédé selon l'une quelconque des revendications 10 à 12 lorsqu'il est exécuté par le circuit de traitement.
